# EUROPÄISCHE PATENTSCHRIFT

(11) **EP 1 731 927 B1**
(45) Veröffentlichungstag und Bekanntmachung des Hinweises auf die Patenterteilung: **17.02.2010**
(21) Anmeldenummer: 06011793.4
(22) Anmeldetag: 08.06.2006
(51) Int. Cl.: G02B 3/12, G02B 23/24, G02B 13/00

(54) **Flüssigkeitsgefüllte Stablinse**
Rod lens filled with liquid
Lentille barreau rempli avec de liquide

(30) Priorität: 09.06.2005 DE 102005027880
(43) Veröffentlichungstag der Anmeldung: 13.12.2006
(73) Patentinhaber: Karl Storz GmbH & Co. KG, 78532 Tuttlingen (DE)
(72) Erfinder: Lei, Fang, Dr., 78591 Durchhausen (DE); Kupferschmid, Markus, 78576 Emmingen-Liptingen (DE)
(74) Vertreter: Weller, Wolfgang

(56) Entgegenhaltungen:
- WO-A-95/35522
- DE-A1- 2 619 393
- DE-B- 1 299 520
- GB-A- 468 227
- US-B1- 6 212 015

## Beschreibung

Die vorliegende Erfindung betrifft eine Stablinse mit einem röhrenförmigen Körper, der an zwei gegenüberliegenden Enden mit einem optisch transparenten Abschlusselement dicht abgeschlossen ist, und mit einem flüssigen oder gelförmigen optischen Medium, und ein Endoskop, das zumindest eine solche Stablinse aufweist.

Eine solche Stablinse ist zum Beispiel aus dem Patent US 5,892,625 bekannt.

Stablinsen an sich sind bekannt und werden zum Beispiel von der Anmelderin unter der Bezeichnung "Hopkins Optik" in starren Endoskopen verbaut.

Stablinsen bestehen im Allgemeinen aus einem zylinderförmigen Körper aus Glas, wobei die gegenüberliegenden kreisförmigen Enden bearbeitet sind, so dass dort optische Elemente gebildet werden. Die Länge ihres Körpers beträgt ein Vielfaches ihres Durchmessers.

Stablinsen haben den Vorteil, dass damit Licht mit einer deutlich höheren Effizienz zum Beispiel in einem Endoskop geleitet werden kann als dies mit herkömmlichen plattenförmigen Linsen möglich ist, zwischen denen ein relativ großer Luftraum vorhanden ist.

Stablinsen aus Glas haben allerdings den Nachteil, dass sie stets starre Körper bilden, und können daher nicht in flexible Endoskope eingebaut werden. Zum Einbau in flexible Endoskope werden daher im Allgemeinen Bildleiterfaserbündel verwendet. Diese Bildleiterfaserbündel haben wiederum den Nachteil, dass sie zu einem pixelartigen Bild führen, was die Präzision der Darstellung deutlich vermindert.

Stablinsen aus Glas haben ferner den Nachteil, dass sie aus einem spröden Material bestehen. Im täglichen Einsatz, zum Beispiel im optischen System eines Endoskops, fallen sie ab und zu herunter, wodurch es zu Absplitterungen oder sogar zum Bruch der Stablinse kommen kann. Solche Schäden machen ein optisches System unbrauchbar. Im Allgemeinen muss das gesamte optische System ausgetauscht werden.

Um die Nachteile solcher Stablinsen aus Glas zu beheben, wurden flexible flüssigkeitsgefüllte Stablinsen entwickelt.

Ein Beispiel für eine solche flexible Stablinse ist aus dem Patent US 5,892,625 bekannt. Die aus diesem Dokument bekannte Stablinse weist einen röhrenförmigen Körper auf, der an seinen beiden Enden durch Abschlusselemente dicht verschlossen ist. Zwischen diesen Abschlusselementen ist ein transparentes Fluid wie Wasser oder ein optisches Fluid angeordnet. Hierdurch werden Stablinsen geschaffen, die zumindest in gewissem Umfang flexibel sind. Diese Stablinsen sind jedoch oft nur schwierig auf die gewünschten optischen Eigenschaften einstellbar.

Die WO 95/35522 offenbart Baueinheiten aus Linsen zur Übertragung eines Bildes, wobei diese Baueinheiten flüssige Stablinsen aufweisen, die zwischen Paaren von festen Linsen angeordnet sind, die entlang einer Achse voneinander beabstandet sind. Ein Endoskop weist eine Vielzahl solcher Baueinheiten aus Linsen auf, die in einem langgestreckten Rohr angeordnet sind.

Die GB 468,227 offenbart eine flüssige Linse von plankonvexer, konkavkonvexer oder bikonvexer Form, die aus zwei Glaslinsen oder Linsen aus ähnlichen Materialien besteht, die aneinander anliegen, die an ihren Rändern miteinander verbunden sind und die einander gegenüberliegende Oberflächen aufweisen, die einen plankonvexen oder doppelkonvexen Raum bilden, der mit einer gewünschten Flüssigkeit, Halbflüssigkeit oder einer Substanz mit viskosen Eigenschaften gefüllt ist.

Die US 6,212,015 B1 offenbart eine Stablinse mit einem Mantel mit zwei gegenüberliegenden Enden, zwei korrigierenden Linsen, wobei je eine an den gegenüberliegenden Enden des Mantels angeordnet ist und einer lichtdurchlässigen Flüssigkeit, die in einem durch den Mantel und die korrigierenden Linsen definierten abgeschlossenen Raum angeordnet ist.

Es ist somit Aufgabe der Erfindung, eine fluidgefüllte Stablinse zu schaffen, mit der auf einfache und preiswerte Weise optische Fehler korrigiert werden können.

Die Anmelderin hat nun herausgefunden, dass durch das Bilden von mehreren Kammern in einer solchen fluidgefüllten Stablinse, die mit flüssigen oder gelförmigen optischen Medien gefüllt sind, die verschiedene Brechungsindizes aufweisen, die optischen Eigenschaften einer fluidgefüllten Stablinse auf einfache, jedoch sehr präzise Weise eingestellt werden können. Somit können optische Fehler zum Beispiel in einem Endoskop korrigiert werden.

Erfindungsgemäß wird die Aufgabe durch die Kombination der Merkmale des Anspruchs 1 gelöst.

Die Begriffe "erstes optisch transparentes Abschlusselement" und "zweites optisch transparentes Abschlusselement", "erstes weiteres optisches Element", "zweites weiteres optisches Element" bzw. "erstes optisches Medium", "zweites optisches Medium" usw., wie sie hierin verwendet werden, dienen lediglich dazu, die Abschlusselemente, weiteren optischen Elemente bzw. optischen Medien voneinander zu unterscheiden und geben keine Hinweise auf deren Anordnung oder andere Eigenschaften.

Der Begriff "weiteres optisches Element", wie er hierin verwendet wird, bezeichnet jedes transparente Element, das eine dichte Abtrennung zwischen zwei Kammern innerhalb des rohrförmigen Körpers bildet.

Da der Brechungsindex von flüssigen oder gelförmigen optischen Medien genau eingestellt werden kann und die flüssigen oder gelförmigen optischen Medien einfach in die Stablinse eingefüllt oder aus der Stablinse entfernt werden können, können die Stablinsen gemäß der Erfindung deutlich einfacher und trotzdem präzise auf gewünschte optische Eigenschaften eingestellt werden.

Somit kann bei der Verwendung solcher Stablinsen in vielen Fällen auf teure und empfindliche optische Bauteile wie Achromate verzichtet werden.

Die Ausbildung des Körpers aus einem flexiblen Material erhöht die Bruchsicherheit der Stablinse.

Durch die Ausbildung des Körpers aus einem flexiblen Material kann außerdem die gesamte Stablinse flexibel ausgebildet werden und dadurch zum Beispiel auch anstelle von Bündeln aus optischen Fasern in flexiblen Endoskopen eingesetzt werden.

Der röhrenförmige Körper der Stablinse kann hierbei jede beliebige Form aufweisen, sofern diese einen inneren Hohlraum und zwei einander gegenüberliegende Öffnungen aufweist. Der Querschnitt des röhrenförmigen Körpers wird dabei im Allgemeinen rund sein, er kann aber auch - wenn gewünscht - beispielsweise oval, ellipsenförmig oder mehreckig sein.

Materialien für den röhrenförmigen Körper sind Kunststoffe.

Die Abschlusselemente und die weiteren optischen Elemente können aus einem beliebigen Material bestehen, sofern dieses gegenüber dem in dem röhrenförmigen Körper eingeschlossenen optischen Medium dicht sowie optisch transparent ist. Beispielhafte Materialien für diese Elemente sind Gläser oder Kunststoffe.

Der röhrenförmige Körper kann auf eine beliebige, dem Fachmann bekannte Weise mit den Abschlusselementen und den weiteren optischen Elementen verbunden sein, sofern eine gegenüber dem eingeschlossenen optischen Medium dichte Verbindung gebildet wird.

Die Abschlusselemente und die weiteren optischen Elemente können zunächst in ein metallisches Rohr eingesetzt werden.

Bei den flüssigen oder gelförmigen optischen Medien kann es sich um jedes flüssige oder gelförmige optische Medium handeln, sofern dessen Brechungsindex größer ist als der von Luft. Beispiele für solche optischen Medien sind Immersionsflüssigkeiten oder optische Gele, wie sie kommerziell von der Firma Cargille Laboratories, Cedar Grove, New Jersey, USA erhältlich sind.

Bevorzugterweise sollten die optischen Medien außerdem Substanzen aufweisen, die über lange Zeit stabil sind.

Bei den in den zumindest zwei Kammern eingeschlossenen optischen Medien kann es sich jeweils um ausschließlich flüssige oder gelförmige optische Medien, aber auch um beliebige Kombinationen aus flüssigen und gelförmigen Medium handeln.

Gemäß der Erfindung besteht der röhrenförmige Körper aus Kunststoff.

Dies hat den Vorteil, dass der röhrenförmige Körper dadurch sowohl leicht als auch sehr bruchsicher ist.

In einer Ausgestaltung der Erfindung ist die Länge des röhrenförmigen Körpers größer als dessen Durchmesser, insbesondere ist die Länge des röhrenförmigen Körpers zumindest dreimal so groß wie dessen Durchmesser.

Solche Verhältnisse von Länge des röhrenförmigen Körpers zu Durchmesser ergeben insbesondere beim Einsatz in einem Endoskop besonders vorteilhafte optische Eigenschaften.

In einer weiteren Ausgestaltung der Erfindung weist zumindest eines der flüssigen oder gelförmigen optischen Medien einen Brechungsindex von mehr als 1,3 auf, vorzugsweise weisen alle flüssigen oder gelförmigen optischen Medien einen Brechungsindex von mehr als 1,3 auf.

Die Lichtleitung in einem optischen Medium verhält sich proportional zum Quadrat des Brechungsindex des optischen Mediums. Das heißt, je höher der Brechungsindex, desto besser die Lichtübertragung. Durch die oben genannte Maßnahme wird somit die Lichtübertragung der Stablinse deutlich verbessert.

In einer weiteren Ausgestaltung ist zumindest eines der Abschlusselemente als optisches Element ausgebildet, wobei insbesondere beide Abschlusselemente als optisches Element ausgebildet sind.

Diese Maßnahme hat den Vorteil, dass die Abschlusselemente nicht nur dazu verwendet werden können, die optischen Medien in den röhrenförmigen Körper einzuschließen, sondern sie können auch zusätzlich dazu dienen, die optischen Eigenschaften der Stablinse auf den jeweiligen Verwendungszweck abzustimmen.

In einer weiteren Ausgestaltung der Erfindung ist das zumindest eine weitere optische Element als Linse ausgebildet.

Diese Maßnahme hat den Vorteil, dass die weiteren optischen Elemente nicht nur dazu verwendet werden können, die optischen Medien voneinander zu trennen, sondern sie können auch zusätzlich dazu dienen, die optischen Eigenschaften der Stablinse auf den jeweiligen Verwendungszweck abzustimmen.

In einer weiteren Ausgestaltung der Erfindung ist das zumindest eine weitere optische Element als optisch transparente Membran ausgebildet.

Eine solche optisch transparente Membran kann sowohl gekrümmt als auch planeben ausgebildet sein.

Diese Maßnahme hat den Vorteil, dass eine optisch transparente Membran sehr leicht ist, was zu einer deutlich leichteren Stablinse führt. Die Verwendung einer gekrümmten Membran bietet ferner die zusätzliche Möglichkeit einer optischen Korrektur.

Eine solche optisch transparente Membran hat außerdem nur sehr geringe Auswirkungen auf die optischen Eigenschaften der Stablinse, so dass hier nicht noch zusätzliche Fehler erzeugt werden, die dann ggf. wieder mittels anderer optischer Elemente bzw. der optischen Medien korrigiert werden müssen.

Bei den beiden vorgenannten Maßnahmen können, wenn mehr als ein weiteres optisches Element vorliegt, eines, mehrere oder alle dieser weiteren optischen Elemente, als Linsen oder optisch transparente Membranen, ausgebildet sein. Kombinationen aus Linsen, optisch transparenten Membranen und anderen optischen Elementen sind ebenfalls möglich.

In einer weiteren Ausgestaltung der Erfindung liegt lediglich ein weiteres optisches Element vor.

Es hat sich herausgestellt, dass in vielen Fällen ein weiteres optisches Element und somit zwei Kammern für die flüssigen oder gelförmigen optischen Medien ausreichen, um die gewünschten Eigenschaften zu erreichen.

Somit schafft diese Maßnahme eine konstruktiv einfache und leicht herstellbare Stablinse.

Es versteht sich, dass die vorstehend genannten und die nachstehend noch zu nennenden Maßnahmen nicht nur in den angegebenen Kombinationen, sondern auch in anderen Kombinationen oder in Alleinstellung verwendbar sind, ohne den Rahmen der Erfindung zu verlassen.

Ausführungsbeispiele der Erfindung sind in den Zeichnungen dargestellt und werden in der nachfolgenden Beschreibung näher erläutert. Es zeigen:
- Figur 1: eine erste Ausführungsform einer fluidgefüllten Stablinse im Längsschnitt,
- Figur 2: ein Endoskop mit fluidgefüllten nicht erfindungsgemässen Stablinsen im Teilschnitt, und
- Figur 3: eine weitere Ausführungsform einer fluidgefüllten Stablinse im Längsschnitt.

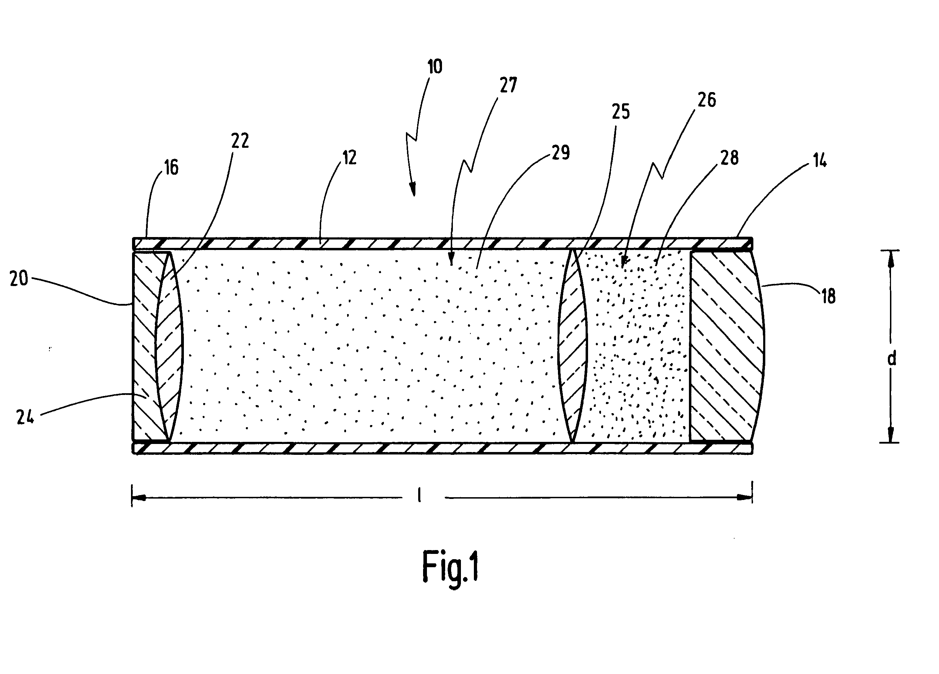

In Figur 1 ist eine fluidgefüllte Stablinse in ihrer Gesamtheit mit der Bezugsziffer 10 bezeichnet.

Diese Stablinse 10 weist einen röhrenförmigen Körper 12 mit einem ersten Ende 14 und einem zweiten Ende 16 auf. Der röhrenförmige Körper 12 besteht hierbei aus einem schrumpffähigen Kunststoff.

Am ersten Ende 14 ist der röhrenförmige Körper 12 mit einem ersten optisch transparenten Abschlusselement 18 verschlossen, das hier als Linse ausgestaltet ist. Der röhrenförmige Körper 12 wurde dabei durch Aufschrumpfen des Kunststoffes auf das erste Abschlusselement 18 dicht mit dem ersten Abschlusselement 18 verbunden.

Am zweiten Ende 16 ist der röhrenförmige Körper 12 mit einem zweiten optisch transparenten Abschlusselement 20 verschlossen. Auch dieses zweite Abschlusselement 20 wurde durch Aufschrumpfen des Kunststoffes des röhrenförmigen Körpers 12 auf das zweite Abschlusselement 20 dicht mit dem röhrenförmigen Körper 12 verbunden.

Das zweite Abschlusselement 20 ist hier als Achromat ausgebildet und weist eine Sammellinse 22 und eine Streulinse 24 auf. Die Sammellinse 22 ist dabei aus Kronglas hergestellt und die Streulinse 24 aus Flintglas. Diese Kombination aus Linse und Linsenmaterialien führt dazu, dass chromatische Aberrationen, die beim Durchtreten von polychromatischem Licht durch die Stablinse 10 auftreten können, korrigiert werden.

Zwischen dem ersten Abschlusselement 18 und dem zweiten Abschlusselement 20 ist in dem röhrenförmigen Körper 12 ein weiteres optisches Element 25 angeordnet, das hier als Linse ausgebildet ist. Dieses optische Element 25 ist ebenfalls durch Aufschrumpfen des Kunststoffes des röhrenförmigen Körpers 12 dicht mit dem röhrenförmigen Körper 12 verbunden. Durch diese dichte Verbindung werden zwei vollständig voneinander getrennte Kammern geschaffen, wobei die Kammern umfänglich von dem röhrenförmigen Körper 12 begrenzt werden. Eine erste Kammer 26 wird dabei auf der einen Seite vom ersten Abschlusselement 18 und auf der anderen Seite von dem weiteren optischen Element 25 begrenzt. Eine zweite Kammer 27 wird auf der einen Seite von dem weiteren optischen Element 25 und auf der anderen Seite von dem zweiten Abschlusselement 20 begrenzt.

In dem hier dargestellten Fall sind die beiden Kammern 26 und 27 unterschiedlich groß, es ist dem Fachmann aber verständlich, dass die Abmessungen der beiden Kammern 26 und 27 jedes beliebige Verhältnis zueinander aufweisen können.

In die erste Kammer 26 ist ein erstes optisches Medium 28 eingefült, und in die zweite Kammer 27 ist ein zweites optisches Medium 29 eingefüllt.

Bei den beiden optischen Medien 28 und 29 handelt es sich in diesem Fall jeweils um flüssige optische Medien. Bei diesen optischen Medien handelt es sich um Immersionsflüssigkeiten, die kommerziell von der Firma Cargille Laboratories, Cedar Grove, New Jersey, USA unter den Formelcodes 4550 und 50350 erhältlich sind.

Die Abmessungen der Kammern 26 und 27 sowie die Brechungsindizes der optischen Medien 28 und 29 sind hierbei aufeinander abgestimmt, um die gewünschten optischen Eigenschaften der Stablinse 10 zu erreichen.

Der röhrenförmige Körper 12 weist eine Länge L und einen inneren Durchmesser D auf. Die Länge L ist dabei etwa 3,5 mal größer als der Durchmesser D, so dass eine für einen Einbau in einen Schaft eines Endoskops geeignete zylinderförmige Form und eine hervorragende optische Leistung erreicht wird.

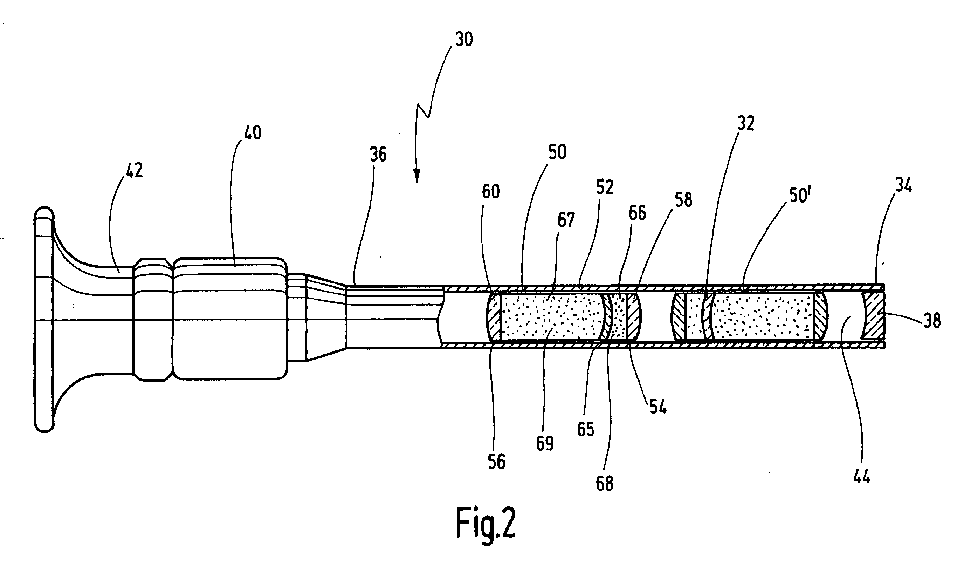

In Figur 2 ist ein Endoskop in seiner Gesamtheit mit der Bezugsziffer 30 bezeichnet.

Das Endoskop 30 weist einen Schaft 32 mit einem distalen Ende 34 und einem proximalen Ende 36 auf.

Der Schaft 32 ist an seinem distalen Ende 34 mit einem Abschlusselement 38 dicht verschlossen, wobei das Abschlusselement 38 hier als Linse ausgebildet ist.

An seinem proximalen Ende 36 mündet der Schaft 32 in einen Kopf 40 des Endoskops 30, an den sich ein Okular 42 anschließt.

Die Innenseite des Schafts 32 bildet ein Optikrohr 44 des Endoskops 30. Durch das Optikrohr 44 wird das Licht vom distalen Ende 34 des Schafts an das Okular 42 geleitet.

In dem Optikrohr 44 sind fluidgefüllte Stablinsen angeordnet, von denen hier zwei 50 und 50' dargestellt sind, die jeweils baugleich sind. Die Stablinse 50' ist dabei gegenüber der Stablinse 50 um 180° gedreht eingebaut. Es können jedoch auch mehr Stablinsen vorhanden sein, die gleich oder unterschiedlich sein können.

Exemplarisch wird nachfolgend eine der beiden nicht erfindungsgemäßen Stablinsen 50 und 50' beschrieben.

Die Stablinse 50 weist einen röhrenförmigen Körper 52 auf, der hier aus Metall besteht. Der röhrenförmige Körper 52 weist ein erstes Ende 54 und ein zweites Ende 56 auf.

An seinem ersten Ende 54 ist der röhrenförmige Körper 52 durch ein erstes optisch transparentes Abschlusselement 58 verschlossen, das hier als Linse ausgebildet ist. Das erste Abschlusselement 58 ist dabei mit dem röhrenförmigen Körper 52 verkittet, um eine dichte Verbindung zu schaffen.

An seinem zweiten Ende 56 ist der röhrenförmige Körper 52 mit einem zweiten optisch transparenten Abschlusselement 60 verschlossen, das hier ebenfalls als Linse ausgebildet ist. Das zweite Abschlusselement 60 ist hierbei mit dem röhrenförmigen Körper 52 verkittet, um eine dichte Verbindung zu schaffen.

In dem röhrenförmigen Körper 52 ist ferner ein weiteres optisches Element 65 angeordnet, das hier als optisch transparente Membran ausgebildet ist. Diese optisch transparente Membran ist mit dem röhrenförmigen Körper 52 verklebt, um eine dichte Verbindung zwischen dem röhrenförmigen Körper 52 und dem weiteren optischen Element 65 zu schaffen. Das weitere optische Element 65 teilt den röhrenförmigen Körper 52 in eine erste Kammer 66 und eine zweite Kammer 67 auf.

Die beiden Kammern 66 und 67 sind jeweils umfänglich durch den röhrenförmigen Körper 52 begrenzt. Die erste Kammer 66 wird auf einer Seite durch das erste Abschlusselement 58 und auf der anderen Seite durch das weitere optische Element 65 begrenzt. Die zweite Kammer 67 wird auf einer Seite von dem weiteren optischen Element 65 und auf der anderen von dem zweiten Abschlusselement 60 begrenzt.

In der ersten Kammer 66 ist ein erstes optisches Medium 68 angeordnet, und in der zweiten Kammer 67 ist ein zweites optisches Medium 69 angeordnet.

Bei den beiden optischen Medien handelt es sich um transparente optische Gele, die kommerziell von der Firma Cargille Laboratories, Cedar Grove, New Jersey, USA unter den Gelcodes 0607 und 0608 erhältlich sind.

Die optischen Eigenschaften der beiden optischen Medien 68 und 69 sind so aufeinander abgestimmt, dass durch sie chromatische Aberrationen korrigiert werden und ein Achromat in dieser Stablinse nicht mehr benötigt wird.

Zur Herstellung einer solchen nicht erfindungsgemäßen Stablinse 50 wird das weitere optische Element 65 in den röhrenförmigen Körper 52 eingeklebt. Danach wird auf der in der Zeichnung dargestellten rechten Seite das erste optische Medium 68 in die erste Kammer 66 eingefüllt. Anschließend wird das erste Abschlusselement 58 in den röhrenförmigen Körper 52 eingesetzt, wobei sichergestellt wird, dass in dem ersten optischen Medium 68 keine Luftblasen mehr vorhanden sind. Das Abschlusselement 58 wird dann dicht mit dem röhrenförmigen Körper 52 verkittet.

In einem zweiten Schritt wird nun in die in dieser Zeichnung auf der linken Seite dargestellte zweite Kammer 67 das zweite optische Medium 69 eingefüllt. Danach wird das zweite Abschlusselement 60 in den röhrenförmigen Körper 52 eingesetzt, wobei sichergestellt wird, dass in dem zweiten optischem Medium 69 keine Luftblasen mehr vorhanden sind. Das zweite Abschlusselement 60 wird dann dicht mit dem röhrenförmigen Körper 52 verkittet, so dass insgesamt eine dichte, optisch transparente fluidgefüllte Stablinse 50 gebildet wird. Eine solche Stablinse 50 kann in gleicher Weise wie eine bekannte Stablinse aus Glas in das Endoskop 30 eingebaut werden.

Das Befüllen einer Stablinse kann auch nach Einsetzen und Verbinden der beiden Abschlusselemente und des weiteren optischen Elements mit dem röhrenförmigen Körper 52 erfolgen, und zwar über radiale Öffnungen im röhrenförmigen Körper 52, die anschließend verschlossen werden.

Über die Stablinse 50 kann noch zusätzlich ein Schlauch aufgeschrumpft werden, um zusätzliche Maßnahmen zur dauerhaften Abdichtung vorzusehen.

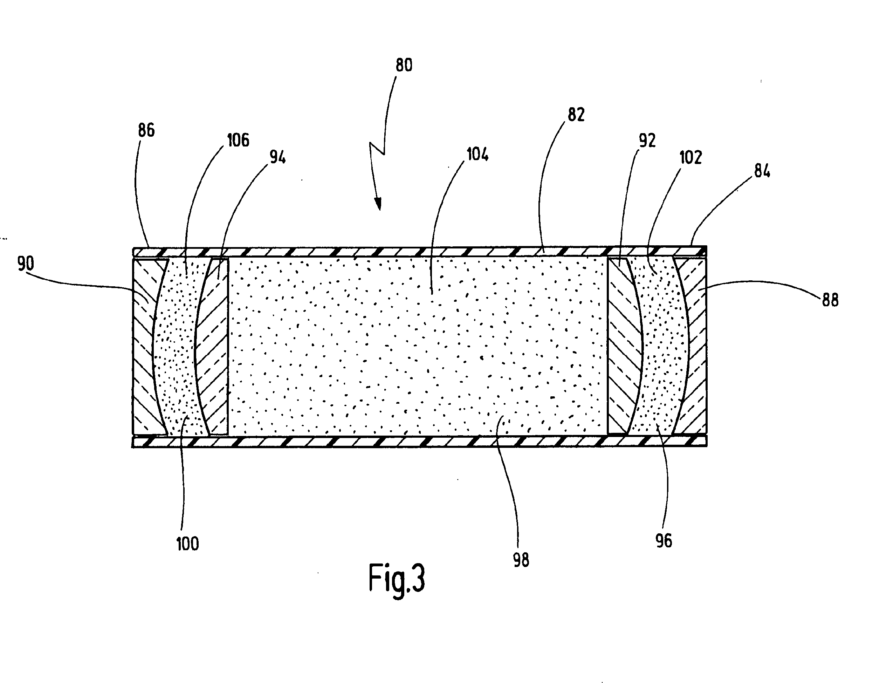

In Figur 3 ist eine Stablinse in ihrer Gesamtheit mit der Bezugsziffer 80 bezeichnet.

Die Stablinse 80 weist einen röhrenförmigen Körper 82 aus einem flexiblen Kunststoff mit einem ersten Ende 84 und einem zweiten Ende 86 auf.

Das erste Ende 84 ist durch ein erstes Abschlusselement 88 dicht verschlossen, das hier als Linse ausgebildet ist. Das erste Abschlusselement 88 ist in den röhrenförmigen Körper 82 eingeklebt, um für eine dichte Verbindung zu sorgen.

Das zweite Ende 86 ist durch ein zweites Abschlusselement 90 dicht verschlossen, das hier als Linse ausgebildet ist. Das zweite Abschlusselement 90 ist in den röhrenförmigen Körper 82 eingeklebt, um eine dichte Verbindung zu schaffen.

Ferner sind in dem röhrenförmigen Körper 82 ein erstes weiteres optisches Element 92 und ein zweites weiteres optisches Element 94 angeordnet. Die beiden weiteren optischen Elemente 92 und 94 sind jeweils mit dem röhrenförmigen Körper 82 verklebt, um eine dichte Verbindung zu schaffen.

Durch das erste Abschlusselement 88 und das erste weitere optische Element 92 wird in dem röhrenförmigen Körper 82 eine erste Kammer 96 gebildet. Durch das erste weitere optische Element 92 und das zweite weitere optische Element 94 wird in dem röhrenförmigen Körper 82 eine zweite Kammer 98 gebildet. Durch das zweite weitere optische Element 94 und das zweite Abschlusselement 90 wird in dem röhrenförmigen Körper 82 eine dritte Kammer 100 gebildet.

In die erste Kammer 96 ist ein erstes optisches Medium 102 eingefüllt. Bei diesem optischen Medium handelt es sich um eine Immersionsflüssigkeit, die von Cargille Laboratories, Cedar Grove, New Jersey, USA, kommerziell unter dem Formelcode 5053 erhältlich ist und die einen Brechungsindex von 1,475 aufweist.

Die zweite Kammer 98 ist mit einem zweiten optischen Medium 104 gefüllt. Bei diesem zweiten optischen Medium 104 handelt es sich um ein optisches Gel, das von Cargille Laboratories, Cedar Grove, New Jersey, USA, unter dem Gelcode 0607 erhältlich ist und das einen Brechungsindex von 1,457 aufweist.

Die dritte Kammer 100 ist mit einem dritten optischen Medium 106 gefüllt, wobei es sich um das gleiche Material handelt, das für das erste optische Medium 102 verwendet wurde.

Somit wird eine symmetrische Stablinse mit drei fluidgefüllten Kammern gebildet.

Das erste Abschlusselement 88, das erste optische Medium 102 und das erste weitere optische Element 92 bilden hierbei ein Linsentriplet, das als Achromat wirkt. Das zweite weitere optische Element 94, das dritte optische Medium 106 und das zweite Abschlusselement 90 bilden ebenfalls ein Linsentriplet, das als Achromat wirkt.

Die hier dargestellte Stablinse 80 mit drei Kammern ist symmetrisch ausgebildet. Es ist dem Fachmann aber verständlich, dass das Verhältnis der Abmessungen der Kammern zueinander und deren Füllung zum Anpassen der optischen Eigenschaften der Stablinse auch anders gewählt werden können.

## Patentansprüche

1. Stablinse mit einem röhrenförmigen Körper (12; 82), der an zwei gegenüberliegenden Enden (14, 16; 84, 86) mit einem optisch transparenten Abschlusselement (18, 20; 88, 90) dicht abgeschlossen ist, und mit einem flüssigen oder gelförmigen optischen Medium, **dadurch gekennzeichnet, dass** in dem röhrenförmigen Körper (12; 82) zumindest ein weiteres optisches Element (25; 92, 94) angeordnet ist, wodurch in dem röhrenförmigen Körper (12; 82) zumindest zwei Kammern (26, 27; 96, 98, 100) gebildet werden; die mit flüssigen oder gelförmigen optischen Medien (28, 29; 102, 104, 106) gefüllt sind, wobei zumindest ein flüssiges oder gelförmiges Medium (28, 29; 102, 104, 106) in einer der zumindest zwei Kammern (26, 27; 96, 98, 100) einen anderen Brechungsindex aufweist als die flüssigen oder gelförmigen Medien (28, 29; 102, 104, 106) in den anderen Kammern (26, 27; 96, 98, 100), und dass der röhrenförmige Körper (12; 82) aus einem flexiblen schrumpffähigen Kunststoff besteht.

2. Stablinse nach Anspruch 1, **dadurch gekennzeichnet, dass** die Länge des röhrenförmigen Körpers (12; 82) größer ist als dessen Durchmesser.

3. Stablinse nach Anspruch 2, **dadurch gekennzeichnet, dass** die Länge des röhrenförmigen Körpers (12; 82) zumindest dreimal so groß wie dessen Durchmesser ist.

4. Stablinse nach einem der Ansprüche 1 bis 3, **dadurch gekennzeichnet, dass** zumindest eines der flüssigen oder gelförmigen optischen Medien (28, 29; 102, 104, 106) einen Brechungsindex von mehr als 1,3 aufweist.

5. Stablinse nach Anspruch 4, **dadurch gekennzeichnet, dass** alle flüssigen oder gelförmigen optischen Medien (28, 29; 102, 104, 106) einen Brechungsindex von mehr als 1,3 aufweisen.

6. Stablinse nach einem der Ansprüche 1 bis 5, **dadurch gekennzeichnet, dass** zumindest eines der beiden Abschlusselemente (18, 20; 88, 90) als optisches Element ausgebildet ist.

7. Stablinse nach Anspruch 6, **dadurch gekennzeichnet, dass** beide Abschlusselemente (18, 20; 88, 90) als optische Elemente ausgebildet sind.

8. Stablinse nach einem der Ansprüche 1 bis 7, **dadurch gekennzeichnet, dass** das zumindest eine weitere optische Element (25; 92, 94) als Linse ausgebildet ist.

9. Stablinse nach einem der Ansprüche 1 bis 7, **dadurch gekennzeichnet, dass** das zumindest eine weitere optische Element (25; 92, 94) als optische transparente Membran ausgebildet ist.

10. Stablinse nach einem der Ansprüche 1 bis 9, **dadurch gekennzeichnet, dass** lediglich ein weiteres optisches Element (25; 92, 94) vorliegt.

11. Endoskop, **dadurch gekennzeichnet, dass** es zumindest eine Stablinse (10; 80) nach einem der Ansprüche 1 bis 10 aufweist.

## Claims

1. Rod lens having a tubular body (12; 82), which is closed tightly with an optically transparent closing element (18, 20; 88, 90) at two opposing ends (14, 16; 84, 86) and a liquid or gel-type optical medium **characterized in that** at least one further optical element (25; 92, 94) is arranged within the tubular body (12; 82) with which at least two chambers (26, 27; 96, 98, 100) are formed within the tubular body (12; 82) which are filled with liquid or gel-type optical media (28, 29; 102, 104, 106) whereby at least one liquid or gel-type optical medium (28, 29; 102, 104, 106) in one of the at least two chambers (26, 27; 96, 98, 100) has a refractive index different from the liquid or gel-type optical media (28, 29; 102, 104, 106) in the other chambers (26, 27; 96, 98, 100) and that the tubular body (12; 82) is made from a flexible shrinkable plastic.

2. Rod lens according to claim 1, **characterized in that** the length of the tubular body (12; 82) is greater than its diameter.

3. Rod lens according to claim 2, **characterized in that** the length of the tubular body (12; 82) is at least three times as big as its diameter.

4. Rod lens according to any one of claims 1 to 3, **characterized in that** at least one of the liquid or gel-type optical media (28, 29; 102, 104, 106) has a refractive index of more than 1.3.

5. Rod lens according to claim 4, **characterized in that** all liquid or gel-type optical media (28, 29; 102, 104, 106) have a refractive index of more than 1.3.

6. Rod lens according to any one of claims 1 to 5, **characterized in that** at least one of the two closing elements (18, 20; 88, 90) is designed as an optical element.

7. Rod lens according to claim 6, **characterized in that** both closing elements (18, 20; 88, 90) are designed as optical elements.

8. Rod lens according to any one of claims 1 to 7, **characterized in that** the at least one further optical element (25; 92, 94) is designed as a lens.

9. Rod lens according to any one of claims 1 to 7, **characterized in that** the at least one further optical element (25; 92, 94) is designed as an optically transparent membrane.

10. Rod lens according to any one of claims 1 to 9, **characterized in that** only one further optical element (25; 92, 94) is present.

11. Endoscope, **characterized in that** it comprises at least one rod lens (10; 80) according to any one of claims 1 to 10.

## Revendications

1. Lentille barreau dotée d'un corps tubulaire (12 ; 82) qui est fermé de manière étanche à deux extrémités opposées (14, 16 ; 84, 86) par un élément terminal optiquement transparent (18, 20 ; 88, 90), et remplie d'un milieu optique liquide ou sous forme de gel, **caractérisée en ce que** dans le corps tubulaire (12 ; 82) est disposé au moins un élément optique supplémentaire (25; 92, 94), de sorte que sont formées dans le corps tubulaire (12 ; 82) au moins deux chambres (26, 27 ; 96, 98, 100) qui sont remplies de milieux optiques liquides ou sous forme de gel (28, 29 ; 102, 104, 106), au moins un milieu liquide ou sous forme de gel (28, 29 ; 102, 104, 106) dans une desdites au moins deux chambres (26, 27 ; 96, 98, 100) présentant un autre indice de réfraction que les milieux liquides ou sous forme de gel (28, 29 ; 102, 104, 106) dans les autres chambres (26, 27; 96, 98, 100), et que le corps tubulaire (12 ; 82) est composé d'une matière plastique flexible rétractable.

2. Lentille barreau selon la revendication 1, **caractérisée en ce que** la longueur du corps tubulaire (12; 82) est supérieure à son diamètre.

3. Lentille barreau selon la revendication 2, **caractérisée en ce que** la longueur du corps tubulaire (12 ; 82) est au moins trois fois supérieure à son diamètre.

4. Lentille barreau selon une des revendications 1 à 3, **caractérisée en ce qu'**au moins un des milieux optiques liquides ou sous forme de gel (28, 29 ; 102, 104, 106) présente un indice de réfraction supérieur à 1,3.

5. Lentille barreau selon la revendication 4, **caractérisée en ce que** tous les milieux optiques liquides ou sous forme de gel (28, 29 ; 102, 104, 106) présentent un indice de réfraction supérieur à 1,3.

6. Lentille barreau selon une des revendications 1 à 5, **caractérisée en ce qu'**au moins un des deux éléments terminaux (18, 20 ; 88, 90) est réalisé sous la forme d'un élément optique.

7. Lentille barreau selon la revendication 6, **caractérisée en ce que** les deux éléments terminaux (18, 20 ; 88, 90) sont réalisés sous la forme d'éléments optiques.

8. Lentille barreau selon une des revendications 1 à 7, **caractérisée en ce que** ledit au moins un élément optique supplémentaire (25; 92, 94) est réalisé sous la forme d'une lentille.

9. Lentille barreau selon une des revendications 1 à 7, **caractérisée en ce que** ledit au moins un élément optique supplémentaire (25; 92, 94) est réalisé sous la forme d'une membrane optique transparente.

10. Lentille barreau selon une des revendications 1 à 9, **caractérisée en ce qu'**un seul élément optique supplémentaire (25 ; 92, 94) est présent.

11. Endoscope, **caractérisée en ce qu'**il présente au moins une lentille barreau (10 ; 80) selon une des revendications 1 à 10.
